# EUROPEAN PATENT SPECIFICATION

(11) **EP 1 209 882 B1**
(45) Date of publication and mention of the grant of the patent: **05.10.2011**
(21) Application number: 01127953.6
(22) Date of filing: 23.11.2001
(51) Int. Cl.: H04M 1/247, H04M 1/725, G06F 3/033

(54) **Method of providing user interface for a portable terminal**
Methode zur Bereitstellung einer Benutzerschnittstelle für ein tragbares Endgerät
Procédé de mise à disposition un interface utilisateur pour un terminal portatif

(30) Priority: 23.11.2000 KR 2000070022
(43) Date of publication of application: 29.05.2002
(60) Divisional application: 10010598.0
(73) Proprietor: SAMSUNG ELECTRONICS CO., LTD., Suwon-City, Kyungki-do (KR)
(72) Inventor: Hong, Jun-Il Samsung E. Co. Ltd. Intel. Prop. Team, Suwon City, Kyungki-Do 442-742 (KR)
(74) Representative: Grünecker, Kinkeldey, Stockmair & Schwanhäusser Anwaltssozietät

(56) References cited:
- EP-A- 0 913 977
- WO-A-97/03534
- DE-A1- 19 743 459
- US-A- 5 396 264
- US-A- 5 737 394
- US-A- 5 914 668
- Micheal Smith: "Tray42: Using the Windows 95 System Tray in C", , 16 January 1999 (1999-01-16), Retrieved from the Internet: URL:http://www.chebucto.ns.ca/~aa529/tray4 2.html [retrieved on 2010-12-09]

## Description

The present invention relates generally to a portable terminal, and in particular, to a method of providing a user interface to implement a function related to a state indicator displayed on a display.

A portable terminal generally displays information about an operation state, received information, and the like on a display such as an LCD (Liquid Crystal Display) panel. Most commonly, an RSSI (Received Signal Strength Indicator), alarm setting, arrival of an SMS (Short Message Service) message, a battery state, and call reservation setting are displayed as unique images. These unique images are called state indicators.

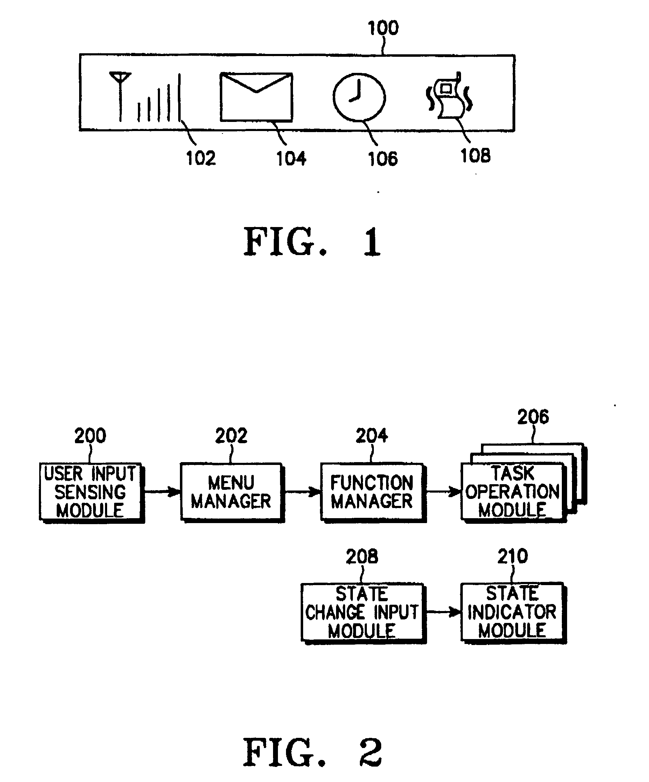

FIG. 1 illustrates an example display with state indicators for a general portable terminal. Four state indicators 102 to 108 are shown on a display 100. Reference numeral 102 denotes an RSSI, reference numeral 104 denotes arrival of a message, reference numeral 106 denotes alarm setting, and reference numeral 108 denotes setting of a vibration mode. Such state indicators as 102 to 108 are utilized for the single use of representing corresponding state changes in the portable terminal.

FIG. 2 is a block diagram of user interfacing software modules related to state changes in the general portable terminal. A state change input module 208 senses a state change that is to be reflected in a corresponding state indicator and provides the state change to a state indicator module 210. When such a state change occurs, a new state indicator is produced or the state representation of an existing state indicator is changed. For example, when an alarm is newly set, the state indicator 106 is generated or when it is time to sound an alarm, the state indicator 106 blinks. A user input sensing module 200 senses a user input like a touch screen input or a button input and notifies a menu manager 202 of the user input. The menu manager 202 selects a function corresponding to a menu selected according to the sensing result of the user input sensing module 200 and notifies a function manager 204 of the selected function. The function manager 204 operates a task operation module corresponding to the selected function among task operation modules 206.

Some state indicators need to invoke their related functions as well as to present state changes to a user. A portable terminal may provide such functions. As far as the RSSI state indicator 102 of FIG. 1 is concerned, the user simply views the state indicator 102 to check the current RSSI, whereas he can implement related functions using the other state indicators 104, 106, and 108 when necessary, as well as recognize state changes represented by the state indicators 104, 106, and 108. For example, when the user recognizes the arrival of a message from the message state indicator 104, he may implement a message read function to read the message. In this case, the user invokes the message read function using a tree structure of menu navigation as provided by the menu manager 202 of FIG. 2. The tree structure of menu navigation causes the inconvenience of entering a plurality of keys by the user and in case the user does not know which menu to search for to execute an intended function, the user inevitably experiences trials and errors.

As an improvement to the menu navigation, a "hot key" scheme has been proposed. According to the hot key scheme, a specific function is additionally registered for a certain key, besides its unique function, so that the registered function is directly invoked by pressing the key under some condition or a certain key is designated for exclusive use of the specific function to directly invoke the function by pressing the key. For example, when the user recognizes arrival of a message from the message state indicator 104, he can read the message without menu navigation by pressing a key specifically designated for message reading.

Even though this hot key method relieves the user of the inconvenience of entering a plurality of keys and experiencing trials and errors, the use of different functions with one key depending on conditions may confuse the user and the separate designation of keys for dedicated use of specific functions increases the number of keys, impeding miniaturization of a mobile phone.

EP 0 913 977 A discloses a radio telephone handset having a user interface comprising a display and input means responsive to a user to manipulate the contents of the display. The display is provided on the front face and the input means on the rear face of the handset. The use of a single soft key based on the idea that the telephone can assume a plurality of predetermined states 40.1 to 40.n is disclosed. Each state 40.1 to 40.n is associated with a predefined group of functions, actions or options 41.1 to 41.n which are possible precisely for that state. A preferred function serving as the default function 42.1 to 42.n is designated in each of these groups. When the telephone changes its state, the soft key can perform the default function if it is activated and the user may scroll between the default function and the whole group of options. If the group of options is selected, the user is able to scroll through the group of options and to select the desired (designated) function with the soft key. When a function is selected with the soft key, the processor runs the associated program sequence to execute the function. The input means may manipulate a cursor/highlighter or a selector for selecting a function displayed on the display and the input means may comprise a touchpad which comprises a plurality of regions, wherein each said region is responsive to the user to manipulate the contents of an associated region of the display.

US 5 737 394 A discloses a telephone apparatus including a plurality of soft keys. These soft keys may be utilized to activate functions or operations which are available depending on the current mode of operation of the telephone apparatus. To enable a user to identify which function may be activated by each of the soft keys, the bottom line displays the currently available functions which may be activated if any of the soft keys are depressed.

WO 97 03534 A discloses a battery powered portable electronic device including an interchangeable battery pack fitted to a main unit of the device, characterized by an auxiliary functional unit contained within the battery pack and arranged to communicate data bi-directionally with circuits within the main unit of the device, the auxiliary functional unit thereby performing the auxiliary function in conjunction with the said circuits within the main unit of the device.

Michael Smith: "Tray 42: Using the Windows 95 System Tray in C", 16 January 1999, retrieved from the Internet: URL: hftp://www.chebucto.ns.ca/∼aa529/tray42.html, relates to an example of manipulating the system tray in the Windows taskbar in the C language.

It is then the object of the present invention to provide an improved user interface in a portable terminal, wherein a user can invoke functions related to state indicators, without designating particular keys for the functions.

It is an aspect of the present invention to not confuse the user with key uses.

To achieve the above object, a method of providing a user interface according to the subject-matter of independent claim 1 is provided.

Preferred embodiments are defined in the dependent claims.

The above object, features and advantages of the present invention will become more apparent from the following detailed description when taken in conjunction with the accompanying drawings in which:
FIG. 1 illustrates an example display of state indicators in a typical mobile phone;
FIG. 2 is a block diagram of user interfacing software modules operated according to state changes in the typical mobile phone;
FIG. 3 is a block diagram of a mobile phone to which the present invention is applied;
FIG. 4 is a block diagram of user interfacing software modules operated according to state changes according to an embodiment of the present invention;
FIG. 5 is a flowchart illustrating a state change registering method according to the embodiment of the present invention; and
FIG. 6 is a flowchart illustrating a user interfacing method according to state changes according to the embodiment of the present invention.

A preferred embodiment of the present invention will be described hereinbelow with reference to the accompanying drawings. In the following description, well-known functions or constructions are not described in detail since they would obscure the invention in unnecessary detail.

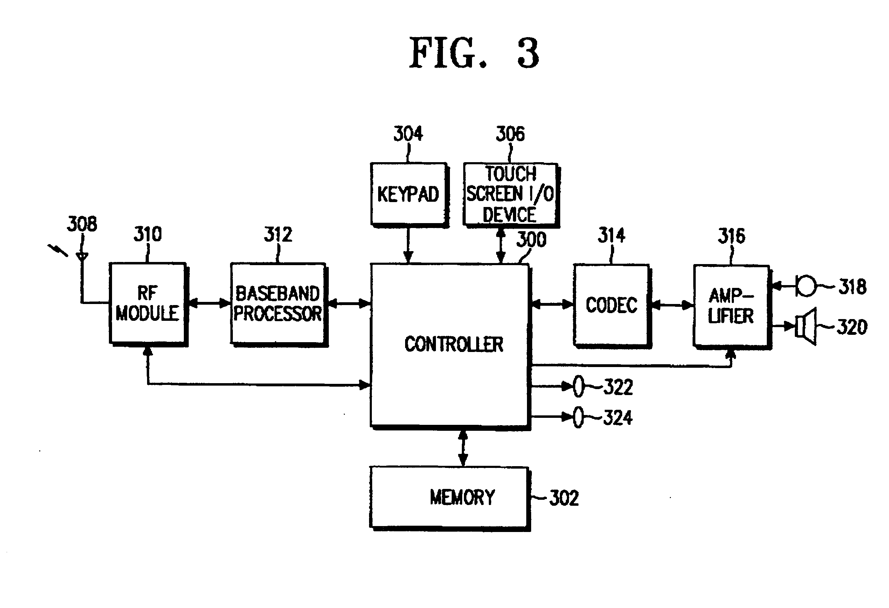

FIG. 3 is a block diagram of a mobile phone as an example of a portable terminal to which the present invention is applied. Referring to FIG. 3, a controller 300 is connected to a memory 302, a keypad 304, a touch screen input/output (I/O) device 306, an RF module 310, a baseband processor 312, and a CODEC 314. The controller 300, being generally a microprocessor chip for exclusive use, processes a general telephone call or data communication, a voice signal and data for wireless Internet access according to a corresponding protocol and controls each component of the mobile phone. As will be described below, the controller 300 processes a user interfacing function according to the present invention. Thus, a description of the controller 300 in the context with the general call process, data communication, and wireless Internet access will be omitted here.

The memory 302 includes a ROM (Read Only Memory), a flash memory, and a RAM (Random Access Memory). The ROM stores operation and control programs and data generated during the control operation of the controller 300. The RAM provides a working memory to the controller 300. The flash memory stores updatable data to be kept.

The keypad 304 includes digit keys and function keys and provides a key input corresponding to a key pressed by the user to the controller 300. The touch screen I/O device 306 is of a structure where a TSP (Touch Sensitive Panel) for user input covers an LCD panel for displaying data thereon. Therefore, the touch screen I/O device 306 displays data as images under the control of the controller 300 and allows the user to use a pen or his finger for user input. The RF module 310 converts an RF signal received from a base station via an antenna 308 to an IF (Intermediate Frequency) signal and outputs the IF signal to the baseband processor 312. The RF module 310 also converts an IF signal received from the baseband processor 312 to an RF signal and transmits the RF signal via the antenna 308.

The baseband processor 312 is a BBA (Baseband Analog ASIC) for interfacing between the controller 300 and the RF module 310. The baseband processor 312 converts a digital baseband signal received from the controller 300 to an analog IF signal and applies the analog IF signal to the RF module 310. The baseband processor 312 also converts an analog IF signal received from the RF module 310 to a digital baseband signal and applies to the digital baseband signal to the controller 300. The CODEC 314 is connected to a microphone 318 and a speaker 320 via an amplifier 316. The CODEC 314 PCM (Pulse Code Modulation)-encodes a voice signal received from the microphone 318 and outputs the voice data to the controller 300. The CODEC 314 PCM-decodes voice data received from the controller 300 and outputs the voice signal to the speaker 320 via the amplifier 316. The amplifier 316 amplifies a voice signal received from the microphone 316 and a voice signal to be transmitted to the speaker 320 and adjusts the volume of the speaker 320 and the gain of the microphone 318 under the control of the controller 300. A ringer 322 generates a ring sound under the control of the controller 300 and a vibrator 324 produces vibrations under the control of the controller 300.

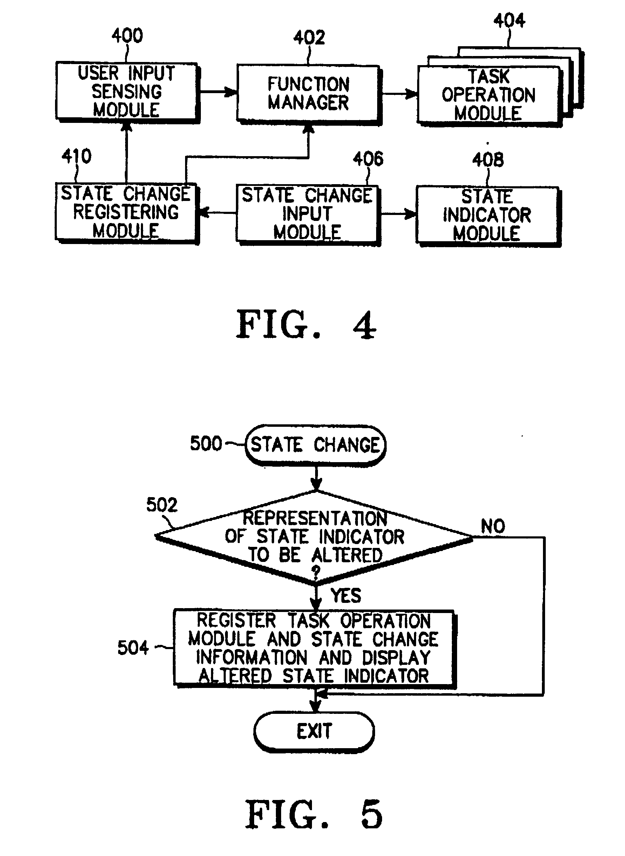

FIG. 4 is a block diagram of user interfacing software modules operated according to state changes in the controller 300 of FIG. 3 according to an embodiment of the present invention. The software modules of FIG. 4 are different from those of FIG. 2 in that the menu manager 202 is omitted. Similarly, to the state change input module 208, a state change input module 406 senses a state change that is to be reflected in a state indicator and notifies a state indicator module 408 of the state change. Then, the state change is displayed on the screen of the touch screen I/O device 306. According to the present invention, the state change input module 406 additionally registers a function associated with the state indicator in a state change registering module 410.

FIG. 5 is a flowchart illustrating a state change registering method according to an embodiment of the present invention. Referring to FIG. 5, when a state change occurs in step 500, the controller 300 determines whether the state change is the kind of state change that will alter the state representation of a state indicator in step 502. If the state change will not change the state representation of the state indicator, a normal operation is performed. On the other hand, if the state change will alter the state representation of the state indicator, the controller 300 registers a related function for the state indicator and alters the state representation of the state indicator in step 504. The function registration is the process of storing the ID (Identification) of a task operation module corresponding to the function and context data representing state change information in the state change registering module 410 for the corresponding state indicator.

For example, when an alarm is set, the state change input module 406 notifies a state indicator module 408 of the state change so that the state change is displayed on the screen of the touch screen I/O device 306 as in the conventional method. Additionally, a task operation module 404 corresponding to an alarm setting-associated function and state change information are registered for the state indicator 106 of FIG. 1 as shown in Table 1 and Table 2. APP_ID_CLOCK is the ID of a clock module for performing a clock function in Table 1 and APP_ID_SCHEDULER is the ID of a scheduler module for scheduling in Table 2.

**(Table 1)**

| state indicator | task operation module ID | state change information |
|---|---|---|
| alarm state indicator | APP_ID_CLOCK | 2000/11/12 17:30 |
| message state indicator | APP_ID_MESSAGE | 2000/11/18 15:30 |
| · | · | · |
| · | · | · |

**(Table 2)**

| state indicator | task operation module ID | state change information |
|---|---|---|
| alarm state indicator | APP_ID_SCHEDULER | 2000/21/25 fourth item |
| message state indicator | APP_ID_MESSAGE | 2000/11/18 15:30 |
| · | · | · |
| · | · | · |

If the state change input module 406 senses an arrival of a new message, it notifies the state indicator module 408 of the message arrival and the state indicator module 408 displays the message arrival on the screen of the touch screen I/O device 306 as in the conventional method. Additionally, a task operation module 404 corresponding to a message reading function and state change information are registered for the state indicator 104 of FIG. 1 as shown in Table 1 and Table 2. The state change information indicates information about the new message by which a task operation module, registered for the state indicator 104, displays the new message on the screen when the user designates the state indicator 104.

In this state, if the user designates the state indicator after viewing the altered state representation of the state indicator, a user input sensing module 400 senses the user designation and notifies a function manager 402 of the user designation. The function manager 402 checks the function registered for the designated state indicator and operates a task operation module 404 corresponding to the function.

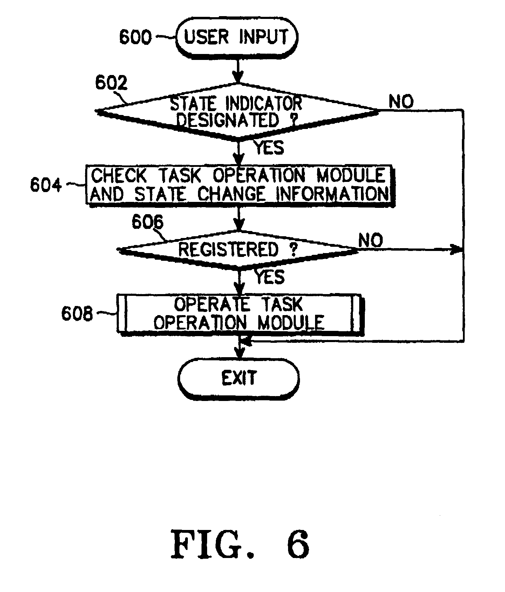

FIG. 6 is a flowchart illustrating a user interfacing method for performing a function corresponding to a designated state indicator in the controller 300. Referring to FIG. 6, upon receipt of a user input, that is, a button input from the keypad 304 or a touch screen input from the touch screen I/O device 306 in step 600, the controller 300 determines whether the user input designates a state indicator in step 602. Designation of a state indicator is done by a touch screen input or a button input. In the case of the touch screen input, the controller 300 determines whether the coordinates of the touch screen input are identical to those of a state indicator representation area. If the touch screen input coordinates indicates one of the state indicators 102 to 108 of FIG. 1, the controller 300 considers that the state indicator is designated and goes to step 604. Otherwise, a normal operation is performed. The button input is applied when a touch screen input is impossible, that is, to a mobile phone having a display for simply displaying images or texts instead of the touch screen I/O device 306. The user designates a state indicator by pressing a select key when he positions a cursor or an input focus over the representation area of the state indicator using scroll keys.

In step 604, the controller 300 checks a task operation module and state change information for the designated state indicator from the state change registering module 410. The controller 300 determines whether a related function has been registered in step 606. In the case of the state indicator 102 of FIG. 1, there is no function registered for the state indicator 102 since it just indicates an RSSI. In this case, the user input is neglected. On the contrary, if a related function is registered, the controller 300 operates the registered task operation module according to the state change information, thereby performing the related function in step 608.

If the user designates the state indicator 104 of FIG. 1 by touch screen input or button input, the message module APP_ID_MESSAGE shown in Tables. 1 and 2 is operated so that a message delivered at 15:30 in November 18, 2000 is displayed.

If as an alarm is set, the state indicator 106 of FIG. 1 is displayed and then the state indicator 106 is designated, an alarm function is invoked. In the case of Table 1, a clock module APP_ID_CLOCK is performed so that an alarm setting for November 12, 2000 is displayed. In the case of Table 2, a scheduling module APP_ID_SCHEDULER is performed so that a fourth schedule item for December 25, 2000 is displayed.

As described above, since a user can directly invoke an intended function related with a state indicator by touch screen input or button input, the present invention relieves the user of the inconvenience of pressing keys many times and experiencing trials and errors. Furthermore, user confusion involved in key manipulation is eliminated and keys for exclusive purposes need not be designated separately. As a result, miniaturization of a mobile phone is not impeded.

While the invention has been shown and described with reference to a certain preferred embodiment thereof, it will be understood by those skilled in the art that various changes in form and details may be made therein. Though the invention has been described in connection with state indicators representing message arrival and alarm setting, it is also applicable to other state indicators such as a call reservation state indicator. The invention can be applied to any portable terminal in which functions related to the display of state indicators need to be invoked, such as a smart phone and a PDA (Personal Digital Assistant) as well as a mobile phone.

## Claims

1. A method performed by a portable terminal -of providing a user interface for invoking a plurality of functions related to a state indicator in the portable terminal displaying a plurality of state indicators (102, 104, 106, 108), wherein a state change is reflected in a corresponding state indicator, the method comprising:
registering (504), by the portable terminal, for the state indicator one of the plurality of functions related to the state indicator when a state change to be reflected in the representation of the state indicator occurs;
altering, by the portable terminal, the state representation of the state indicator corresponding to the state change; and
invoking (608), by the portable terminal, the registered function upon receipt of a user input (600) for designating the state indicator.

2. The method of claim 1, further comprising determining (602) whether coordinates of a touch screen input indicate a representation area of the state indicator upon receipt of the touch screen input; and wherein said receipt of a user input for designating the state indicator is that the coordinates of the touch screen input indicate the representation area of the state indicator.

3. The method of claim 1, further comprising determining (602) whether a cursor or an input focus is positioned over a representation area of the state indicator upon receipt of a user button input; and wherein said receipt of a user input for designating the state indicator is that the cursor or input focus is positioned over the representation area of the state indicator.

4. The method of claim 2, wherein the state indicator indicates message arrival in a portable terminal where the state indicator is displayed on a screen of a touch screen input/output device when the message arrives, the related function represents a message reading function, and the state change to be reflected represents a message arrival.

5. The method of claim 2, wherein the state indicator indicates alarm setting in a portable terminal where the state indicator is displayed on a screen of a touch screen input/output device when an alarm is set, the related function represents an alarm function, and the state change to be reflected represents setting an alarm.

## Patentansprüche

1. Verfahren, das von einem tragbaren Endgerät durchgeführt wird, um eine Benutzeroberfläche zum Aufrufen einer Vielzahl von Funktionen bereitzustellen, die mit einem Status-Indikator in dem tragbaren Endgerät verbunden sind, das eine Vielzahl von Status-Indikatoren (102, 104, 106, 108) anzeigt, wobei eine Status-Änderung in einem entsprechenden Status-Indikator widergespiegelt wird und das Verfahren umfasst:
Registrieren (504) einer der Vielzahl von Funktionen, die mit dem Status-Indikator verbunden sind, durch das tragbare Endgerät für den Status-Indikator, wenn eine in der Darstellung des Status-Indikators widerzuspiegelnde Status-Änderung eintritt;
Ändern der Status-Darstellung des Status-Indikators entsprechend der Status-Änderung durch das tragbare Endgerät; und
Aufrufen (608) der registrierten Funktion durch das tragbare Endgerät beim Empfang einer Benutzereingabe (600) zum Bestimmen des Status-Indikators.

2. Verfahren nach Anspruch 1, das des Weiteren umfasst, dass festgestellt wird (602), ob Koordinaten einer Eingabe an einem berührungsempfindlichen Bildschirm einen Darstellungsbereich des Status-Indikators angeben, wenn die Eingabe über den berührungsempfindlichen Bildschirm empfangen wird, und wobei der Empfang einer Benutzereingabe zum Bestimmen des Status-Indikators darin besteht, dass die Koordinaten der Eingabe über den berührungsempfindlichen Bildschirm den Darstellungsbereich des Status-Indikators angeben.

3. Verfahren nach Anspruch 1, das des Weiteren umfasst, dass festgestellt wird (602), ob ein Cursor oder ein Eingabe-Fokus bei Empfang einer Benutzer-Tasteneingabe über einem Darstellungsbereich des Status-Indikators positioniert ist, und wobei der Empfang einer Benutzereingabe zum Angeben des Status-Indikators darin besteht, dass der Cursor bzw. Eingabe-Fokus über dem Darstellungsbereich des Status-Indikators positioniert ist.

4. Verfahren nach Anspruch 2, wobei der Status-Indikator Eingang einer Nachricht in einem tragbaren Endgerät anzeigt, in dem der Status-Indikator auf einem Bildschirm einer Eingabe-/Ausgabevorrichtung mit berührungsempfindlichen Bildschirm angezeigt wird, wenn die Nachricht eingeht, die verbundene Funktion eine Nachrichtlese-Funktion repräsentiert und die widerzuspiegelnde Status-Änderung einen Nachrichteingang repräsentiert.

5. Verfahren nach Anspruch 2, wobei der Status-Indikator Alarm-Einstellungen in einem tragbaren Endgerät anzeigt, in dem der Status-Indikator auf einem Bildschirm einer Eingabe-/Ausgabevorrichtung mit berührungsempfindlichen Bildschirm angezeigt wird, wenn ein Alarm eingestellt ist, die verbundene Funktion eine Alarm-Funktion repräsentiert und die wiederzuspiegelnde Status-Änderung Einstellen eines Alarms repräsentiert.

## Revendications

1. Procédé, mis en oeuvre par un terminal portable, de mise à disposition d'une interface utilisateur pour appeler une pluralité de fonctions relatives à un indicateur d'état du terminal portable permettant de visualiser une pluralité d'indicateurs d'états (102, 104, 106, 108), dans lequel un changement d'état est répercuté dans un indicateur d'état correspondant, le procédé comprenant les étapes consistant à :
- enregistrer (504), par le terminal portable, pour l'indicateur d'état une fonction de la pluralité de fonctions relatives à l'indicateur d'état lorsqu'un changement d'état, à répercuter dans la représentation de l'indicateur d'état, a lieu ;
- modifier, par le terminal portable, la représentation de l'état de l'indicateur d'état correspondant au changement d'état ; et
- appeler (608), par le terminal portable, la fonction enregistrée lors de la réception d'une entrée de l'utilisateur (600) pour désigner l'indicateur d'état.

2. Procédé selon la revendication 1, comprenant en outre l'étape consistant à déterminer (602) si les coordonnées d'une entrée d'un écran tactile indiquent une zone de représentation de l'indicateur d'état lors de la réception de l'entrée de l'écran tactile et dans lequel ladite réception d'une entrée de l'utilisateur pour désigner l'indicateur d'état consiste en ce que les coordonnées de l'entrée de l'écran tactile indiquent la zone de représentation de l'indicateur d'état.

3. Procédé selon la revendication 1, comprenant en outre l'étape consistant à déterminer (602) si un curseur ou une focalisation d'entrée est positionné sur une zone de représentation de l'indicateur d'état lors de la réception d'une entrée par un bouton d'utilisateur et dans lequel ladite réception d'une entrée de l'utilisateur pour désigner l'indicateur d'état consiste en ce que le curseur ou la focalisation d'entrée soit positionné sur la zone de représentation de l'indicateur d'état.

4. Procédé selon la revendication 2, dans lequel l'indicateur d'état indique l'arrivée d'un message dans un terminal portable dans lequel l'indicateur d'état est visualisé sur un écran d'un dispositif d'entrée/sortie d'écran tactile lorsque le message arrive, la fonction relative représentant une fonction de lecture de message et le changement d'état à répercuter représentant l'arrivée d'un message.

5. Procédé selon la revendication 2, dans lequel l'indicateur d'état indique la configuration d'une alarme dans un terminal portable, l'indicateur d'état étant visualisé sur un écran d'un dispositif d'entrée/sortie d'écran tactile lorsqu'une alarme est configurée, la fonction relative représentant une fonction d'alarme et le changement d'état à répercuter représentant la configuration d'une alarme.
